# FASCICULE DE BREVET EUROPEEN

(11) **EP 2 802 854 B1**
(45) Date de publication et mention de la délivrance du brevet: **23.01.2019**
(21) Numéro de dépôt: 13701833.9
(22) Date de dépôt: 07.01.2013
(51) Int. Cl.: G01M 11/04, G02B 15/16, G01J 1/42, G01J 1/04, G01J 1/08, G02B 27/30

(54) **DISPOSITIF OPTIQUE, BANC DE TEST OPTIQUE ET PROCEDE DE TEST OPTIQUE**
OPTISCHE VORRICHTUNG, OPTISCHER PRÜFSTAND UND OPTISCHES TESTVERFAHREN
OPTICAL DEVICE, OPTICAL TEST BENCH AND OPTICAL TEST METHOD

(30) Priorité: 13.01.2012 FR 1250333
(43) Date de publication de la demande: 19.11.2014
(73) Titulaire: SPHEREA Test & Services, 31023 Toulouse Cedex 1 (FR)
(72) Inventeur: PITTE, Emmanuelle, F-92260 Fontenay aux Roses (FR); PETIT, Vincent, F-75017 Paris (FR); LECOQ, Pierre, F-92370 Chaville (FR)
(74) Mandataire: Mazabraud, Xavier
(86) Numéro de dépôt international: PCT/FR2013/050025
(87) Numéro de publication internationale: WO 2013/104851

(56) Documents cités:
- CN-B- 101 226 344
- FR-A1- 2 936 065
- JP-A- 2005 091 930
- JP-A- 2010 211 842
- US-A- 5 564 811
- US-A1- 2004 263 783
- US-A1- 2005 128 468

## Description

La présente invention concerne un dispositif optique, un banc de test optique et un procédé de test optique.

On connait notamment un banc de test optique décrit par les documents US 2004/263783 et US 2005/0128468.

Afin de tester un système d'observation optique ou optronique, appelé par la suite unité à tester, il est connu d'utiliser un banc de test optique comportant un dispositif optique destiné à fournir une onde lumineuse de test de vergence variable, c'est-à-dire pouvant être convergente, divergente ou collimatée.

Le dispositif optique connu comporte une source lumineuse fournissant une onde lumineuse, appelée onde lumineuse source, un écran recevant l'onde lumineuse source et en occultant une partie pour fournir une onde lumineuse, appelée onde lumineuse de mire, et une lentille optique (ou équivalent) convergente, destinée à recevoir l'onde lumineuse de mire et présentant un foyer du côté de la source lumineuse et de l'écran.

En particulier, la lentille peut être remplacée par un miroir concave.

Dans ce dispositif optique connu, la source lumineuse et l'écran sont mobiles ensemble par rapport à la lentille de manière à placer l'écran en arrière du foyer, au foyer ou bien devant le foyer de la lentille ou du miroir concave, de manière que le dispositif optique fournisse respectivement une onde lumineuse de test divergente, collimatée ou bien convergente.

L'onde lumineuse de test est destinée à être reçue par l'unité à tester qui voit ainsi la mire formée par l'écran comme si cette mire était située à une distance comprise entre une valeur inférieure à cinq kilomètres et l'infini (distance supérieure à cinq kilomètres), suivant la vergence de l'onde lumineuse de test.

L'unité à tester est alors destinée à focaliser sur la mire et à fournir une image de cette mire à un dispositif informatique. Ce dernier peut alors réaliser différents tests sur l'image afin, en particulier, d'évaluer la qualité de la focalisation réalisée par l'unité à tester.

Le dispositif optique connu précédent présente comme problème qu'il est difficile de replacer précisément la mire au foyer de la lentille ou du miroir concave. Ce replacement nécessite de nombreuses manipulations et vérifications de la position de la mire. En outre, le système mécanique permettant de placer la mire par rapport à la lentille ou au miroir concave est complexe et coûteux.

Or, un tel replacement est nécessaire. Par exemple, afin de déterminer l'axe de référence mécanique de l'unité à tester, il est connu de réaliser une autocollimation utilisant un miroir réfléchissant l'onde de test collimatée. Or, si l'écran n'est pas précisément au foyer de la lentille ou du miroir concave, l'onde réfléchie ne peut plus être observée par un système de visualisation vidéo ou optique.

Ainsi, il peut être souhaité de disposer d'un système optique destiné à fournir une onde lumineuse d'une mire de vergence variable de manière facile.

A cet effet, il est proposé un système optique selon la revendication 1 comportant :
- un dispositif de génération d'une onde lumineuse plane, appelée onde lumineuse collimatée, et
- un dispositif de déviation de l'onde lumineuse collimatée pour fournir une onde lumineuse, appelée onde lumineuse de test, le dispositif de déviation présentant une distance focale réglable.

De façon optionnelle, la distance focale du dispositif de déviation est réglable en particulier à l'infini.

De façon optionnelle, la distance focale est réglable dans un intervalle s'étendant de l'infini à une valeur prédéterminée.

De façon optionnelle, la valeur prédéterminée est négative.

De façon optionnelle, la valeur prédéterminée est positive.

De façon optionnelle, le dispositif de déviation comporte :
- une première lentille optique destinée à recevoir l'onde lumineuse collimatée et à la dévier pour fournir une onde lumineuse, appelée onde lumineuse intermédiaire ;
- une seconde lentille optique destinée à recevoir l'onde lumineuse intermédiaire et à la dévier pour fournir l'onde lumineuse de test ;
- un dispositif d'écartement supportant les deux lentilles optiques et destiné à permettre de régler un écartement entre les deux lentilles optiques dont dépend la distance focale du dispositif de déviation ; et dans lequel les deux lentilles optiques (202, 204) présentent des distances focales opposées.

De façon optionnelle, la première lentille optique est divergente et la seconde lentille optique est convergente.

De façon optionnelle, le rapport en valeur absolue des distances focales des deux lentilles optiques est différent de un.

De façon optionnelle, les deux lentilles optiques sont de même matériau.

De façon optionnelle, le rapport en valeur absolue de la distance focale de la première lentille sur la distance focale de la seconde lentille est compris entre 0,992 et 0,995.

Le dispositif de génération de l'onde lumineuse collimatée comporte : - une source lumineuse émettant une onde lumineuse source ; - un écran partiellement transparent et présentant un certain motif, l'écran étant disposé au travers de l'onde lumineuse source de manière à en occulter une partie et à en laisser passer une autre partie, appelée onde lumineuse de mire ; - un collimateur agencé pour recevoir l'onde lumineuse de mire et la collimater pour fournir l'onde lumineuse collimatée.

En outre, il est proposé un banc de test optique comportant : - un système optique selon l'invention ; - un système d'observation optique ou optronique, appelé unité à tester, destiné à recevoir l'onde lumineuse de test et à fournir une image à partir de l'onde lumineuse de test ; - un dispositif informatique destiné à réaliser un ou plusieurs traitements sur l'image.

En outre, il est proposé un procédé de test d'un système d'observation optique ou optronique, appelé unité à tester, selon la revendication 11 comportant : - le réglage d'une distance focale d'un dispositif de déviation, - la fourniture d'une onde lumineuse plane, appelée onde lumineuse collimatée, au dispositif de déviation ; - la déviation par le dispositif de déviation de l'onde lumineuse collimatée pour fournir une onde lumineuse, appelée onde lumineuse de test ; - la fourniture de l'onde lumineuse de test à l'unité à tester, ces étapes étant réalisées plusieurs fois, en réglant à chaque fois la distance focale du dispositif de déviation à une valeur différente.

De façon optionnelle, la déviation de l'onde lumineuse collimatée comporte : - la fourniture de l'onde lumineuse collimatée à une première lentille optique destinée à la dévier pour fournir une onde lumineuse, appelée onde lumineuse intermédiaire ; - la fourniture de l'onde lumineuse intermédiaire à une seconde lentille optique destinée à la dévier pour fournir l'onde lumineuse de test ; et dans lequel le réglage de la distance focale du dispositif de déviation comporte : - le réglage d'un écartement entre les deux lentilles optiques dont dépend la distance focale du dispositif de déviation.

Des exemples de mise en oeuvre de l'invention vont à présent être décrits en référence aux figures suivantes :
- la figure 1 est une vue simplifiée d'un banc de test optique selon l'invention,
- la figure 2 est une vue en coupe d'un dispositif de déviation du banc de test optique de la figure 1,
- la figure 3 est une vue simplifiée du dispositif de déviation de la figure 2 sur lesquelles une onde lumineuse de test fournie par le dispositif de déviation est représentée, pour un premier réglage du dispositif de déviation,
- la figure 4 est similaire à la figure 3, pour un second réglage du dispositif de déviation, et
- la figure 5 est un schéma-blocs d'un procédé de test optique selon l'invention mis en oeuvre par le banc de test optique de la figure 1.

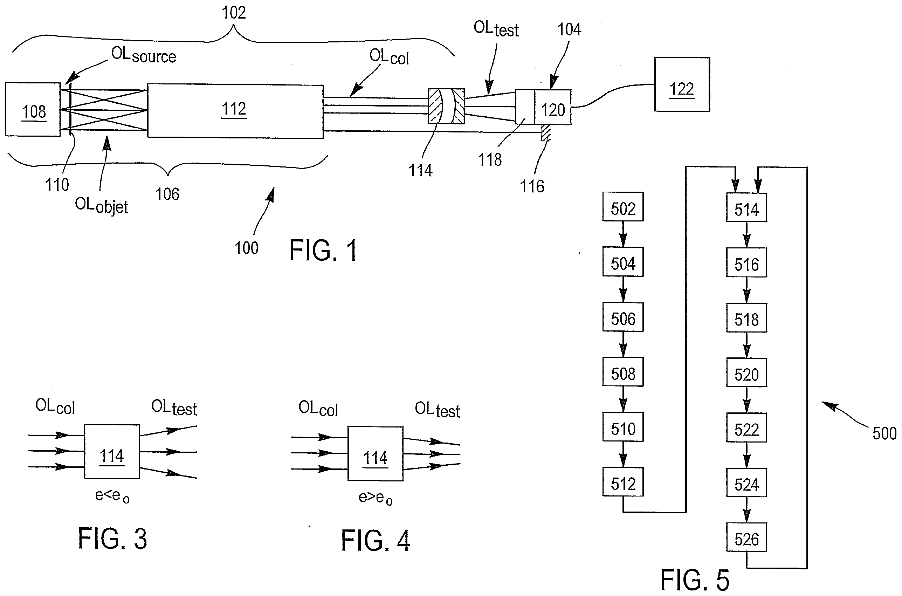

En référence à la figure 1, un banc de test optique 100 selon l'invention comporte un système optique 102 destiné à fournir une onde lumineuse de test OLₜₑₛₜ et un système d'observation optique ou optronique, appelé unité à tester 104, destiné à recevoir l'onde lumineuse de test OLₜₑₛₜ.

Le système optique 102 comporte tout d'abord un dispositif de génération 106 d'une onde lumineuse plane, appelée onde lumineuse collimatée et notée OL_{col}.

Le dispositif de génération 106 comporte tout d'abord une source lumineuse 108 émettant une onde lumineuse de vergence non nulle, appelée onde lumineuse source et notée OL_{source}. La source lumineuse 108 est par exemple un laser ou bien un réseau de diodes électroluminescentes.

Le dispositif de génération 106 comporte en outre un écran 110 partiellement transparent et présentant un certain motif. L'écran 110 est disposé au travers de l'onde lumineuse source OL_{source} de manière à en occulter une partie et à en laisser passer une autre partie, appelée onde lumineuse de mire et notée OLₘᵢᵣₑ. L'écran 110 forme une mire que l'unité à tester 104 est destinée à viser, c'est-à-dire à focaliser. L'écran sera donc appelé par la suite « mire ».

Le dispositif de génération 106 comporte en outre un collimateur 112 agencé pour recevoir l'onde lumineuse de mire OLₘᵢᵣₑ et pour la collimater afin de fournir l'onde lumineuse collimatée OL_{col}.

Le système optique 102 comporte en outre un dispositif de déviation 114 de l'onde lumineuse collimatée OL_{col} pour fournir l'onde lumineuse de test OLₜₑₛₜ. Comme cela sera expliqué par la suite, le dispositif de déviation 114 présente une distance focale notée F qui est variable.

De préférence, l'unité à tester 104 est distante d'au moins un mètre par rapport au système de déviation 114.

Le système optique 102 comporte en outre un miroir 116 agencé à côté du système d'observation à tester 104 de manière à recevoir une partie de l'onde lumineuse collimatée OL_{col}, mais sans autant écranter le système d'observation à tester 104. Le miroir 116 est orienté perpendiculairement à l'onde lumineuse collimatée OL_{col} de manière à la réfléchir dans sa direction d'arrivée, vers le collimateur 112. Le miroir 116 est fixé au système d'observation à tester 104 de manière à pouvoir être utilisé pour déterminer l'axe de référence mécanique de l'unité à tester 104 par autocollimation, comme expliqué précédemment.

L'unité à tester 104 comporte tout d'abord un dispositif de focalisation 118 destiné à recevoir l'onde lumineuse de test OLₜₑₛₜ.

L'unité à tester 104 comporte en outre une cellule d'enregistrement d'image 120, sur laquelle le dispositif de focalisation 118 est destiné à focaliser l'onde lumineuse de test OLₜₑₛₜ afin d'y former une image de la mire 110. La cellule d'enregistrement d'image 120 est destinée à enregistrer cette image.

Le système optique 102 comporte en outre un dispositif informatique 122 connecté à la cellule d'enregistrement d'image afin de recevoir l'image enregistrée par cette dernière. Le dispositif informatique 122 est destiné à réaliser différents tests sur cette image en particulier pour évaluer le degré de flou de l'image. Cette évaluation permet d'évaluer la justesse de la focalisation réalisée par le dispositif de focalisation 118 de l'unité à tester 104.

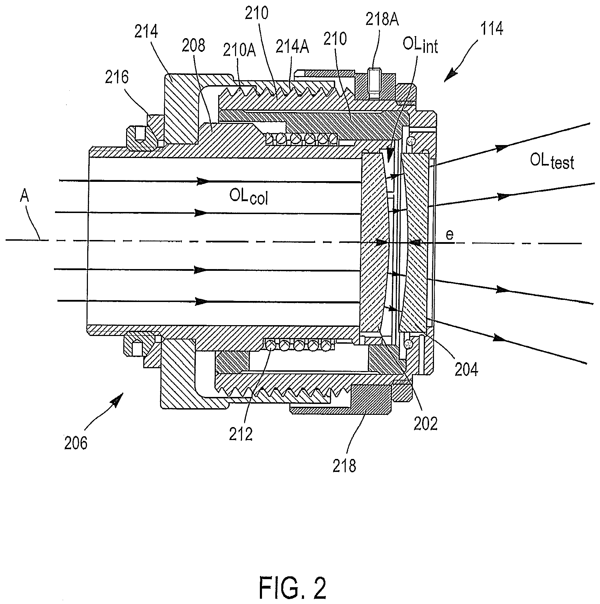

En référence à la figure 2, le dispositif de déviation 114 comporte tout d'abord une première lentille optique 114 destinée à recevoir l'onde lumineuse collimatée OL_{col} et à la dévier en une onde lumineuse, appelée onde lumineuse intermédiaire OLᵢₙₜ.

Le dispositif de déviation 110 comporte en outre une seconde lentille optique 204 destinée à recevoir l'onde lumineuse intermédiaire OLᵢₙₜ et à la dévier en l'onde lumineuse de test OLₜₑₛₜ.

Les deux lentilles optiques 202, 204 sont alignées selon leur axe optique principal (axe selon lequel un rayon lumineux n'est pas dévié), noté A.

Dans la suite de la description, les adjectifs de positions tels que avant, arrière, interne, externe, etc., feront référence à l'axe optique principal A, orienté dans le sens d'arrivée de l'onde lumineuse de mire OLₘᵢᵣₑ.

Les deux lentilles optiques 202, 204 présentent des distances focales, notées respectivement F1 et F2, opposées. Dans l'exemple décrit, la première lentille optique 114 est divergente (distance focale F1 négative), tandis que la seconde lentille optique 118 est convergente (distance focale F2 positive). Plus précisément, dans l'exemple décrit, la première lentille 204 est une lentille plan-convexe (dans le sens de passage de la lumière), tandis que la seconde lentille 206 est une lentille concave-plan (dans le sens de passage de la lumière).

En outre, dans l'exemple décrit, les deux lentilles optiques sont de même matériau, par exemple en verre. De préférence, elles sont pourvues d'un traitement anti-reflet. En effet, le dispositif de déviation 114 comporte quatre interfaces air/verre. Or, en l'absence de traitement ait-reflet, des images parasites potentiellement visibles par l'unité à tester 104 seraient créées à chaque interface. Le test de l'unité à tester 104 serait donc perturbé.

Le dispositif de déviation 114 comporte en outre un dispositif d'écartement 206 supportant les deux lentilles optiques 202, 204 et destiné à permettre de régler un écartement e entre les deux lentilles optiques 202, 204. La distance focale F du dispositif de déviation 110 dépend de cet écartement e, de sorte que, en faisant varier cet écartement e, il est possible de régler la distance focale F.

Dans l'exemple décrit, le dispositif d'écartement 206 comporte tout d'abord un manchon interne 208 auquel la première lentille optique 202 est fixée.

Le dispositif d'écartement 206 comporte en outre un manchon externe 210 emmanché sur le manchon interne 208 et auquel la seconde lentille optique 204 est fixée. Le manchon externe 210 est muni d'un filetage extérieur 210A. Le manchon interne 208 est destiné à coulisser le long de l'axe optique principal A dans le manchon externe 210, afin d'écarter ou de rapprocher la première lentille optique 202 de la seconde lentille optique 204 le long de l'axe optique principal A.

Le dispositif d'écartement 206 comporte en outre un ressort 212 comprimé le long de l'axe optique principal A entre les deux manchons 208, 210 et destiné à rattraper les jeux entre les pièces.

Le dispositif d'écartement 206 comporte en outre une bague de réglage 214 montée sur le manchon interne 208 de manière à pouvoir tourner sur le manchon interne 208 autour de l'axe optique principal A. La bague de réglage 214 est en butée à l'avant contre le manchon interne 208. La bague de réglage 214 comporte un filetage intérieur 214A engrené avec le filetage extérieur 210A du manchon externe 210. La bague de réglage 214 est en outre munie d'un repère (non visible sur la figure) sur sa face externe.

Le dispositif d'écartement 206 comporte en outre une bague de maintien 216 montée sur le manchon interne 208 en butée à l'arrière de la bague de réglage 214, de sorte que cette dernière soit enserrée entre la bague de maintien 216 et le manchon interne 208 afin d'être bloquée en translation le long de l'axe optique principal A par rapport au manchon interne 208.

Ainsi, la mise en rotation de la bague de réglage 214 entraîne, au moyen de l'engrenage des filetages 210A et 214A et grâce à son blocage en translation, le déplacement du manchon interne 208 le long de l'axe optique principal A et ainsi le réglage de l'écartement e entre les première et seconde lentilles optiques 202, 204.

Le dispositif d'écartement 206 comporte en outre une bague de repérage 218 montée sur le manchon externe 210 de manière à pouvoir être tournée sur ce manchon externe 210 autour de l'axe optique principal A. Une vis 218A est prévue pour fixer la bague de repérage 218 par rapport au manchon externe 210 dans une position souhaitée. La bague de repérage 218 est munie de graduations sur sa face externe destinée à être mises en relation avec le repère de la bague de réglage 214, afin de pouvoir positionner la bague de réglage 214 par rapport à la bague de repérage 218.

De préférence, le rapport en valeur absolue des distances focales F1, F2 des deux lentilles optiques 202, 204 est différent de un. Dans l'exemple décrit, le rapport en valeur absolue de la distance focale F1 sur la distance focale F2 est de 0,994. De manière générale, le rapport en valeur absolue de la distance focale F1 sur la distance focale F2 est de préférence compris entre 0,992 et 0,995. Ainsi, il est possible d'obtenir une distance focale F du dispositif de déviation 114 nulle (c'est-à-dire que le dispositif de déviation 114 ne dévie alors pas l'onde lumineuse collimatée OL_{col}, de sorte que l'onde de test OLₜₑₛₜ est identique à l'onde lumineuse collimatée OL_{col}, et est donc plane) pour une valeur non nulle de l'écartement e, appelée écartement neutre e₀. Ainsi, lorsque l'écartement e est inférieur à l'écartement neutre e₀, la distance focale F du dispositif de déviation 114 est négative et le dispositif de déviation 114 est divergent (figure 3), tandis que lorsque l'écartement e est supérieur à l'écartement neutre e₀, la distance focale F du dispositif de déviation 114 est positive et le dispositif de déviation 114 est convergent (figure 4).

En outre, avec un tel rapport des distances focales F1 et F2, les erreurs géométriques et chromatiques sont relativement négligeables.

De préférence, l'écartement e peut être réglé de manière à faire varier la distance focale F de -50 mètres à +50 mètres, en passant par l'infini, c'est-à-dire sur les deux intervalles : ]-∞ ; -50 mètres] et [+50 mètres ;+∞[.

De préférence, les filetages 210A, 214A sont tels qu'un seul tour au plus de la bague de repérage 210 permet de couvrir les deux intervalles souhaités.

En référence à la figure 5, un procédé de test 500 selon l'invention du système d'observation optique ou optronique 104 va à présent être décrit.

Au cours d'une étape 502, la source lumineuse 108 génère l'onde lumineuse source OL_{source}.

Au cours d'une étape 504, l'onde lumineuse source OL_{source} passe au travers de la mire 110 pour donner l'onde lumineuse de mire OLₘᵢᵣₑ.

Au cours d'une étape 506, le collimateur 112 reçoit l'onde lumineuse de mire OLₘᵢᵣₑ et collimate cette dernière pour fournir l'onde lumineuse collimatée OL_{col}.

Au cours d'une étape 508, le dispositif de déviation 114 reçoit l'onde lumineuse collimatée OL_{col} et la dévie conformément à sa distance focale F pour fournir l'onde lumineuse de test OLₜₑₛₜ.

Au cours d'une étape 510, la bague de réglage 214 est tournée afin de régler, à l'aide du miroir 116, la distance focale F du dispositif de déviation 114 à l'infini.

Au cours d'une étape 512, la bague de repérage 218 est tournée afin de placer une des graduations en face du repère de la bague de réglage 214 et pour fixer la bague de repérage 218 à l'aide de la vis 218A. Cette graduation, appelée graduation neutre, indique donc la position neutre de la bague de réglage, dans laquelle l'onde lumineuse de test est collimatée. De préférence, les autres graduations sont graduées en dioptries de manière à indiquer les dioptries du dispositif de déviation 114 correspondant à l'angle de la bague de réglage 214 par rapport à sa position neutre.

Au cours d'une étape 514, la bague de réglage 214 est tournée afin de régler, à l'aide du repère et des graduations, la distance focale F du dispositif de déviation 114 à une valeur souhaitée.

Au cours d'une étape 516, la source lumineuse 108 génère l'onde lumineuse source OL_{source}.

Au cours d'une étape 518, l'onde lumineuse source OL_{source} passe au travers de la mire 110 pour donner l'onde lumineuse de mire OLₘᵢᵣₑ.

Au cours d'une étape 520, le collimateur 112 reçoit l'onde lumineuse de mire OLₘᵢᵣₑ et collimate cette dernière pour fournir l'onde lumineuse collimatée OL_{col}.

Au cours d'une étape 522, le dispositif de déviation 114 reçoit l'onde lumineuse collimatée OL_{col} et la dévie conformément à sa distance focale F pour fournir l'onde lumineuse de test OLₜₑₛₜ.

Au cours d'une étape 524, le dispositif de focalisation 118 de l'unité à tester 104 reçoit l'onde lumineuse de test OLₜₑₛₜ et réalise une focalisation de cette dernière sur la cellule d'enregistrement 120.

Au cours d'une étape 526, la cellule d'enregistrement 120 forme une image à partir de l'onde lumineuse focalisée par le dispositif de focalisation 118 et transmet cette image au dispositif informatique 122.

Au cours d'une étape 528, le dispositif 122 reçoit l'image formée par la cellule d'enregistrement 120 et réalise un ou plusieurs traitements de cette image afin d'en déduire un indice caractérisant la qualité de la focalisation réalisée par le dispositif de focalisation.

Les étapes 514 à 528 sont réalisées plusieurs fois successives en réglant l'écartement e sur une valeur différente à chaque fois (et donc en réglant la distance focale F du dispositif de déviation 114 sur une valeur différente à chaque fois). Les valeurs auxquelles l'écartement e est successivement réglé comportent de préférence au moins : une valeur inférieure à e₀ (distance focale F négative), la valeur e₀ (distance focale F infinie) et une valeur supérieure à e₀ (distance focale F positive).

L'invention n'est pas limitée à l'exemple de mise en oeuvre décrit précédemment, mais au contraire définie par les revendications qui suivent.

Il apparaîtra en effet à l'homme du métier que diverses modifications peuvent être apportées à cet exemple de mise en oeuvre, à la lumière de l'enseignement qui vient de lui être divulgué.

En particulier, l'invention peut être appliquée au domaine visible comme c'est le cas dans l'exemple décrit précédemment, ou bien au domaine infrarouge.

Par ailleurs, dans les revendications qui suivent, les termes utilisés ne doivent pas être interprétés comme limitant les revendications aux éléments de l'exemple de mise en oeuvre décrit précédemment, mais doivent être interprétés pour y inclure tous les équivalents dont la prévision est à la portée de l'homme du métier en appliquant ses connaissances générales.

## Revendications

1. Banc de test optique, comprenant un système optique (102) qui comprend :
- un dispositif de génération (106) d'une onde lumineuse plane, appelée onde lumineuse collimatée (OL_{col}) ;
- un dispositif de déviation (114) de l'onde lumineuse collimatée pour fournir une onde lumineuse, appelée onde lumineuse de test (OLₜₑₛₜ), le dispositif de déviation (114) présentant une distance focale réglable ; et,
- un système d'observation optique ou optronique, appelé unité à tester (104), destiné à recevoir l'onde lumineuse de test (OLₜₑₛₜ) et à fournir une image à partir de l'onde lumineuse de test (OLₜₑₛₜ) ;
le dispositif de génération comprenant :
- une source lumineuse (108) émettant une onde lumineuse source (OL_{source}),
- un écran (110) partiellement transparent et présentant un certain motif, l'écran étant disposé au travers de l'onde lumineuse source (OL_{source}) de manière à en occulter une partie et à en laisser passer une autre partie, appelée onde lumineuse de mire (OLₘᵢᵣₑ) ;
- un collimateur (112) agencé pour recevoir l'onde lumineuse de mire (OLₘᵢᵣₑ) et la collimater pour fournir l'onde lumineuse collimatée (OL_{col}) ; et,
- un dispositif informatique (122) destiné à réaliser un ou plusieurs traitements sur l'image ;
**Caractérisé en ce que** le système optique comprend en outre un miroir (116) agencé à côté de l'unité à tester (104) de manière à recevoir une partie de l'onde lumineuse collimatée (OL_{col}) sans écranter l'unité à tester (104) et orienté perpendiculairement à l'onde lumineuse collimatée (OL_{col}) de manière à la réfléchir dans sa direction d'arrivée, vers le collimateur (112) de manière à pouvoir être utilisé pour déterminer l'axe de référence mécanique de l'unité à tester (104) par autocollimation.

2. Banc de test optique selon la revendication 1, dans lequel la distance focale du dispositif de déviation (114) est réglable en particulier à l'infini.

3. Banc de test optique selon la revendication 2, dans lequel la distance focale est réglable dans un intervalle s'étendant de l'infini à une valeur prédéterminée.

4. Banc de test optique selon la revendication 3, dans lequel la valeur prédéterminée est négative.

5. Banc de test optique selon la revendication 3, dans lequel la valeur prédéterminée est positive.

6. Banc de test optique selon l'une des revendications 1 à 5, dans lequel le dispositif de déviation comporte :
- une première lentille optique (202) destinée à recevoir l'onde lumineuse collimatée (OL_{col}) et à la dévier pour fournir une onde lumineuse, appelée onde lumineuse intermédiaire (OLᵢₙₜ) ;
- une seconde lentille optique (204) destinée recevoir l'onde lumineuse intermédiaire (OLᵢₙₜ) et à la dévier pour fournir l'onde lumineuse de test (OLₜₑₛₜ) ; et,
- un dispositif d'écartement (206) supportant les deux lentille optiques (202, 204) et destiné à permettre de régler un écartement (e) entre les deux lentille optiques (202,204) dont dépend la distance focale du dispositif de déviation (114),
et dans lequel les deux lentilles optiques (202, 204) présentent des distances focales opposées.

7. Banc de test optique selon la revendication 6, dans lequel la première lentille optique (202) est divergente et la seconde lentille optique (204) est convergente.

8. Banc de test optique selon la revendication 6 ou 7, dans lequel le rapport des distances focales des deux lentilles optiques (202, 204) est différent de un.

9. Banc de test optique selon l'une des revendications 5 à 8, dans lequel les deux lentilles optiques sont de même matériau.

10. Banc de test optique selon les revendications 8 et 9, dans lequel le-dit rapport est compris entre 0,992 et 0,995, par exemple 0,994.

11. Procédé de test d'un système d'observation optique ou optronique, appelé unité à tester (104), l'unité à tester (104) étant destinée à recevoir une onde lumineuse, appelée onde lumineuse de test (OLₜₑₛₜ), et à fournir une image à partir de l'onde lumineuse de test (OLₜₑₛₜ), comportant :
- le réglage (514) d'une distance focale d'un dispositif de déviation (114),
- la fourniture (520) d'une onde lumineuse plane, appelée onde lumineuse collimatée (OL_{col}), au dispositif de déviation (114), l'onde lumineuse collimatée (OL_{col}) étant générée à partir d'une onde lumineuse source (OL_{source}) ayant passée au travers d'une mire (110) ;
- la déviation (522) par le dispositif de déviation (114) de l'onde lumineuse collimatée (OL_{col}) pour fournir l'onde lumineuse de test (OLₜₑₛₜ) ;
- la fourniture (522) de l'onde lumineuse de test (OLₜₑₛₜ) à l'unité à tester (104) ; et,
- la réalisation d'un ou plusieurs traitements sur l'image ;
ces étapes étant réalisées plusieurs fois, en réglant à chaque fois la distance focale du dispositif de déviation (114) à une valeur différente, caractérisé en fournissant un miroir (116) agencé à côté de l'unité à tester (104) de manière à recevoir une partie l'onde lumineuse collimatée (OL_{col}) sans écranter l'uniter à tester (104) et orienté perpendiculairement à l'onde lumineuse collimatée (OL_{col}) de manière à la réfléchir dans sa direction d'arrivée, vers le collimateur (112) de manière à pouvoir être utilisé pour déterminer l'axe de référence mécanique de l'unité à tester (104) par autocollimation.

12. Procédé de test selon la revendication 11, dans lequel la déviation (522) de l'onde lumineuse collimatée (OL_{col}) comporte :
- la fourniture de l'onde lumineuse collimatée à une première lentille optique (202) destinée à la dévier pour fournir une onde lumineuse, appelée onde lumineuse intermédiaire (OLᵢₙₜ),
- la fourniture de l'onde lumineuse intermédaire (OLᵢₙₜ) à une seconde lentille optique (204) destinée à la dévier pour fournir l'onde lumineuse de test (OLₜₑₛₜ),
et dans lequel le réglage de la distance focale du dispositif de déviation (114) comporte le réglage d'un écartement (e) entre les deux lentilles optiques (202, 204) dont dépend la distance du dispositif de déviation (114).

## Patentansprüche

1. Optischer Prüfstand, umfassend ein optisches System (102) mit:
- einer Vorrichtung (106) zum Erzeugen einer ebenen Lichtwelle, genannt kollimierte Lichtwelle (OL_{col});
- einer Vorrichtung (114) zur Ablenkung der kollimierten Lichtwelle, um eine Lichtwelle zu liefern, genannt Prüflichtwelle (OLₜₑₛₜ), wobei die Ablenkvorrichtung (114) eine einstellbare Brennweite aufweist; und
- einem optischen oder optronischen Beobachtungssystem, genannt zu prüfende Einheit (104), das bestimmt ist für den Empfang der Prüflichtwelle (OLₜₑₛₜ) und für die Bereitstellung einer Abbildung von der Prüflichtwelle (OLₜₑₛₜ);
wobei die Erzeugungsvorrichtung umfasst:
- eine Lichtquelle (108), die eine Quellenlichtwelle (OL_{source}) aussendet,
- eine Abschirmung (110), die teilweise transparent ist und ein bestimmtes Muster aufweist, wobei die Abschirmung durch die Quellenlichtwelle (OL_{source}) hindurch derart angeordnet ist, dass sie einen Teil derselben abschattet und einen anderen Teil derselben passieren lässt, genannt Prüfmusterlichtwelle (OLₘᵢᵣₑ);
- einen Kollimator (112), der ausgebildet ist für den Empfang der Prüfmusterlichtwelle (OLₘᵢᵣₑ) und für die Kollimation derselben, um die kollimierte Lichtwelle (OL_{col}) zu liefern; und
- eine Rechenvorrichtung (122), die bestimmt ist für die Durchführung einer oder mehrerer Verarbeitungen an der Abbildung;
**dadurch gekennzeichnet, dass** das optische System außerdem einen Spiegel (116) aufweist, der neben der zu prüfenden Einheit (104) derart angeordnet ist, dass dieser einen Teil der kollimierten Lichtwelle (OL_{col}) ohne Abschattung der zu prüfenden Einheit (104) empfängt, und der senkrecht zur kollimierten Lichtwelle (OL_{col}) orientiert ist, so dass er diese in ihrer Ankunftsrichtung in Richtung auf den Kollimator (112) reflektiert, derart, dass sie genutzt werden kann, um die mechanische Referenzachse der zu prüfenden Einheit (104) durch Autokollimation zu bestimmen.

2. Optischer Prüfstand nach Anspruch 1, wobei die Brennweite der Ablenkvorrichtung (114) insbesondere bis unendlich einstellbar ist.

3. Optischer Prüfstand nach Anspruch 2, wobei die Brennweite in einem Intervall einstellbar ist, das von unendlich bis zu einem vorgegebenen Wert reicht.

4. Optischer Prüfstand nach Anspruch 3, wobei der vorgegebene Wert negativ ist.

5. Optischer Prüfstand nach Anspruch 3, wobei der vorgegebene Wert positiv ist.

6. Optischer Prüfstand nach einem der Ansprüche 1 bis 5, wobei die Ablenkvorrichtung umfasst:
- eine erste optische Linse (202), die bestimmt ist für den Empfang der kollimierten Lichtwelle (OL_{col}) und für die Ablenkung derselben, um eine Lichtwelle, genannt Zwischenlichtwelle (OLᵢₙₜ), zu liefern;
- eine zweite optische Linse (204), die bestimmt ist für den Empfang der Zwischenlichtwelle (OLᵢₙₜ) und für die Ablenkung derselben, um die Prüflichtwelle (OLₜₑₛₜ) zu liefern; und
- eine Abstandsvorrichtung (206), die die beiden optischen Linsen (202, 204) trägt und die bestimmt ist für die Ermöglichung einer Einstellung eines Abstands (e) zwischen den beiden optischen Linsen (202, 204), von welchem die Brennweite der Ablenkungsvorrichtung (114) abhängt,
wobei die beiden optischen Linsen (202, 204) entgegengesetzte Brennweiten aufweisen.

7. Optischer Prüfstand nach Anspruch 6, wobei die erste optische Linse (202) zerstreuend und die zweite optische Linse (204) konvergierend ist.

8. Optischer Prüfstand nach Anspruch 6 oder 7, wobei das Verhältnis der Brennweiten der beiden optischen Linsen (202, 204) ungleich eins ist.

9. Optischer Prüfstand nach einem der Ansprüche 5 bis 8, wobei die beiden optischen Linsen aus dem gleichen Material bestehen.

10. Optischer Prüfstand nach den Ansprüchen 8 und 9, wobei das Verhältnis zwischen 0,992 und 0,995 beträgt, zum Beispiel 0,994.

11. Verfahren zum Prüfen eines optischen oder optronischen Beobachtungssystems, genannt zu prüfende Einheit (104), wobei die zu prüfende Einheit (104) bestimmt ist für den Empfang einer Lichtwelle, genannt Prüflichtwelle (OLₜₑₛₜ) und für die Bereitstellung einer Abbildung von der Prüflichtwelle (OLₜₑₛₜ), umfassend:
- das Einstellen (514) einer Brennweite einer Ablenkungsvorrichtung (114),
- das Liefern (520) einer ebenen Lichtwelle, genannt kollimierte Lichtwelle (OL_{col}), an der Ablenkungsvorrichtung (114), wobei die kollimierte Lichtwelle (OL_{col}) aus einer Quellenlichtwelle (OL_{source}) erzeugt wird, die ein Prüfmuster (110) passiert hat;
- die Ablenkung (522) der kollimierten Lichtwelle (OL_{col}) durch die Ablenkungsvorrichtung (114) zum Liefern der Prüflichtwelle (OLₜₑₛₜ);
- das Bereitstellen (522) der Prüflichtwelle (OLₜₑₛₜ) an der zu prüfenden Einheit (104); und
- das Durchführen einer oder mehrerer Verarbeitungen an der Abbildung;
wobei diese Schritte mehrmals durchgeführt werden und dabei die Brennweite der Ablenkungsvorrichtung (114) jedes Mal auf einen anderen Wert eingestellt wird,
**gekennzeichnet durch** das Vorsehen eines Spiegels (116), der neben der zu prüfenden Einheit (104) derart angeordnet ist, dass der Spiegel einen Teil der kollimierten Lichtwelle (OL_{col}) ohne Abschattung der zu prüfenden Einheit (104) empfängt, und der senkrecht zur kollimierten Lichtwelle (OL_{col}) orientiert wird, derart, dass er diese in ihrer Ankunftsrichtung in Richtung auf den Kollimator (112) reflektiert, so dass sie genutzt werden kann, um die mechanische Referenzachse der zu prüfenden Einheit (104) durch Autokollimation zu bestimmen.

12. Prüfverfahren nach Anspruch 11, wobei die Ablenkung (552) der kollimierten Lichtwelle (OL_{col}) umfasst:
- das Bereitstellen der kollimierten Lichtwelle an einer ersten optischen Linse (202), die für deren Ablenkung bestimmt ist, um eine Lichtwelle, genannt Zwischenlichtwelle (OLᵢₙₜ), zu liefern,
- das Bereitstellen der Zwischenlichtwelle (OLᵢₙₜ) an einer zweiten optischen Linse (204), die für deren Ablenkung bestimmt ist, um die Prüflichtwelle (OLₜₑₛₜ) zu liefern,
und wobei die Einstellung der Brennweite der Ablenkungsvorrichtung (114) das Einstellen eines Abstands (e) zwischen den beiden optischen Linsen (202, 204) umfasst, von dem der Abstand der Ablenkungsvorrichtung (114) abhängt.

## Claims

1. Optical test bench, comprising an optical system (102) that comprises:
- a device (106) for generating a planar light wave, referred to as a collimated light wave (OL_{col});
- a device (114) for diverting the collimated light beam in order provide a light wave, referred to as a test light wave (OLₜₑₛₜ), the diversion device (114) having an adjustable focal distance; and
- an optical or optronic observation system, referred to as a unit to be tested (104), intended to receive the test light wave (OLₜₑₛₜ) and to provide an image from the test light wave (OLₜₑₛₜ);
the generation device comprising:
- a light source (108) emitting a source light wave (OL_{source}),
- a partially transparent screen (110) having a certain pattern, the screen being disposed across the source light wave (OL_{source}) so as to shut off part thereof and to allow another part thereof to pass, referred to as a target light wave (OL_{target});
- a collimator (112) arranged to receive the target light wave (OL_{target}) and to collimate it to provide the collimated light wave (OL_{col}); and
a computing device intended to carry out one or more processing operations on the image;
**characterised in that** the optical system further comprises a mirror (116) arranged alongside the unit to be tested (104) so as to receive part of the collimated light wave (OL_{col}) without screening the unit to be tested (104) and oriented perpendicular to the collimated light wave (OL_{col}) so as to reflect it in its direction of arrival, towards the collimator (112) so as to be able to be used for determining the mechanical reference axis of the unit to be tested (104) by auto-collimation.

2. Optical test bench according to claim 1, wherein the focal distance of the diversion device (114) is adjustable in particular to infinity.

3. Optical test bench according to claim 2, wherein the focal distance is adjustable in a range extending from infinity to a predetermined value.

4. Optical test bench according to claim 3, wherein the predetermined value is negative.

5. Optical test bench according to claim 3, wherein the predetermined value is positive.

6. Optical test bench according to any of claims 1 to 5, wherein the diversion device comprises:
- a first optical length (202) intended to receive the collimated light wave (OL_{col}) and to divert it in order to provide a light wave, referred to as an intermediate light wave (OLᵢₙₜ);
- a second optical lens (204) intended to receive the intermediate light wave (OLᵢₙₜ) and to divert it in order to provide the test light wave (OLₜₑₛₜ); and
- a separation device (206) supporting the two optical lenses (202, 204) and intended to make it possible to adjust a separation (e) between the two optical lenses (202, 204) on which the focal distance of the diversion device (114) depends,
and wherein the two optical lenses (202, 204) have opposite focal distances.

7. Optical test bench according to claim 6, wherein the first optical lens (202) is divergent and the second optical lens (204) is convergent.

8. Optical test bench according to claim 6 or claim 7, wherein the ratio of the focal distances of the two optical lenses (202, 204) is different from one.

9. Optical test bench according to any of claims 5 to 8, wherein the two optical lenses are made from the same material.

10. Optical test bench according to claim 8 and claim 9, wherein said ratio is between 0.992 and 0.995, for example 0.994.

11. Method for testing an optical or optronic observation system, referred to as a unit to be tested (104), the unit to be tested (104) being intended to receive a light wave, referred to as a test light wave (OLₜₑₛₜ), and to provide an image from the test light wave (OLₜₑₛₜ), comprising:
- the adjustment (514) of a focal distance of a diversion device (114),
- the provision (520) of a planar light wave, referred to as a collimated light wave (OL_{col}), to the diversion device (114), the collimated light wave (OL_{col}) being generated from a source light wave (OL_{source}) that has passed through a target (110);
- the diversion (522) by the diversion device (114) of the collimated light wave (OL_{col}) in order to provide the test light wave (OLₜₑₛₜ);
- the provision (522) of the test light wave (OLₜₑₛₜ) to the unit to be tested (104); and
- the carrying out of one or more processing operations on the image;
these steps being performed a plurality of times, on each occasion adjusting the focal distance of the diversion device (114) to a different value,
**characterised in** providing a mirror (116) arranged alongside the unit to be tested (104) so as to receive part of the collimated light wave (OL_{col}) without screening the unit to be tested (104) and oriented perpendicular to the collimated light wave (OL_{col}) so as to reflect it in its direction of arrival, towards the collimator (112) so as to be able to be used for determining the mechanical reference axis of the unit to be tested (104) by auto-collimation.

12. Test method according to claim 11, wherein the diversion (522) of the collimated light wave (OL_{col}) comprises:
- the provision of the collimated light wave to a first optical lens (202) intended to divert it in order to provide a light wave, referred to as an intermediate light wave (OLᵢₙₜ),
- the provision of the intermediate light wave (OLᵢₙₜ) to a second optical lens (204) intended to divert it in order to provide the test light wave (OLₜₑₛₜ),
and wherein the adjustment of the focal distance of the diversion device (114) comprises the adjustment of a separation (e) between the two optical lenses (202, 204) on which the distance of the diversion device (114) depends.
